# EUROPEAN PATENT APPLICATION

(11) **EP 1 414 274 A2**
(43) Date of publication of application: **28.04.2004**
(21) Application number: 03255414.9
(22) Date of filing: 29.08.2003
(51) Int. Cl.: H04S 3/00

(54) **Information reproduction system, information reproduction device and information reproduction method**

(30) Priority: 29.08.2002 JP 2002251854
(71) Applicant: Pioneer Corporation, Tokyo-to (JP)
(72) Inventor: Yako, Isao, c/o Pioneer Corporation, Kawagoe-shi Saitama-ken (JP)
(74) Representative: Townsend, Victoria Jayne

(57) **Abstract**

A DVD player (4D) receives output control information for controlling output of an audio signal to output lines (61) , from an AV amplifier apparatus (60) , and determines output channels for the audio signal based on the output control information. When decoding audio data recorded on a DVD and generating an audio signal, down mix processing is conducted as occasion demands, based on the output channels determined based on the output control information.

## Description

The present invention relates to an information reproduction system, information reproduction apparatus and information reproduction method for conducting multi-channel audio reproduction.

An information reproduction system for conducting multi-channel audio reproduction is used to implement, for example, a surround reproduction and a home theater. In many cases, such an information reproduction system includes an information reproduction apparatus, such as a DVD player, an AV amplifier corresponding to multiple channels, and approximately five to eight speakers. For example, a DVD reproduction system that conducts 5.1 channel surround reproduction includes a DVD player, amulti-channel AV amplifier, and six speakers, i.e., a left-hand front speaker, a right-hand front speaker, a center speaker, a sub-woofer, a left-hand rear speaker and a right-hand rear speaker. When implementing a home theater, a monitor apparatus is added to them.

For implementing multi-channel reproduction in such an information reproduction system, it is demanded to connect as many speakers as needed to implement multi-channel reproduction to the AV amplifier apparatus, conduct setting as to whether a speaker is connected and the speaker position with respect to the AV amplifier apparatus, and conduct setting as to whether a speaker is connected and the speaker position with respect to the information reproduction apparatus as well. When such preparations have been made, the user can bodily sense the sound field with the surround effect and feeling of presence generated by the multi-channel reproduction.

For implementing the multi-channel reproduction in such an information reproduction system of multi-channel type, the user is demanded to input setting as to whether a speaker is connected and the speaker position to an information reproduction apparatus by operating operation switches on the information reproduction apparatus.

For inputting such setting, however, the user needs to have an expert knowledge concerning the kinds and characteristics of speakers, and in some cases detailed information such as sizes and installation positions of the speakers is needed. This results in a problem that it is difficult for a user having no knowledge of audio products to input such setting and such a user tends to make a mistake in inputting the setting. In some cases, a mistake in inputting the setting prevents multi-channel reproduction from being implemented, prevents the surround effect from being generated, and prevents the sound field with the feeling of presence from being reproduced. In addition, when reproducing a movie, a situation that speech of the movie is not output occurs in some cases.

It takes a lot of trouble and imposes a heavy stress on the user to input setting as to whether a speaker is connected and the speaker position, to both the information reproduction apparatus and the AV amplifier apparatus. This results in a problem that it is not easy to implement the multi-channel reproduction.

In addition, depending upon DVD software, channel setting for audio output might differ from title to title recorded on the DVD. In this case, the user is demanded to alter channel setting for audio output in the information reproduction apparatus whenever the title changes. This results in a problem that it takes a lot of trouble and imposes a heavy stress on the user to conduct the setting alteration work.

The present invention has been achieved in order to solve the problems exemplified above. It is an object of the present invention to provide an information reproduction system information reproduction apparatus and information reproduction method capable of eliminating or lightening the user's work of inputting the channel setting for the audio output, reducing the stress imposed on theuser, and implementingthemulti-channel audio reproduction easily.

The above object of the present invention can be achieved by an information reproduction system of the present invention, the information reproduction system provided with: an information reproduction apparatus which generates an audio signal from audio information and outputting the audio signal; an output apparatus which outputs the audio signal output from the information reproduction apparatus, to output lines; and an output control apparatus which controls output of the audio signal in the output apparatus to the output lines, wherein the output control apparatus is provided with: a storage device which stores output control information in order to control output of the audio signal in the output apparatus to the output lines; a control device which controls the output apparatus based on the output control information stored by the storage device; and a transmitter device which transmits the output control information stored by the storage device to outside, and the information reproduction apparatus is provided with: a receiver device which receives the output control information transmitted from the output control apparatus; an output channel determination device which determines output channels for the audio signal based on the output control information received by the receiver device; an information acquisition device which acquires the audio information; a signal generation device which generates an audio signal corresponding to the output channels determined by the output channel determination device, from the audio information acquired by the information acquisition device; and a signal output device which outputs the audio signal generated by the signal generation device.

The above object of the present invention can be achieved by an information reproduction apparatus of the present invention for generating an audio signal from audio information and outputting the audio signal, the information reproduction apparatus provided with: a receiver device which receives output control information from another device that holds the output control information for controlling output of the audio signal output from the information reproduction apparatus to output lines ; an output channel determination device which determines output channels for the audio signal based on the output control information received by the receiver device; an information acquisition device which acquires the audio information; a signal generation device which generates an audio signal corresponding to the output channels determined by the output channel determination device, from the audio information acquired by the information acquisition device; and a signal output device which outputs the audio signal generated by the signal generation device.

The above object of the present invention can be achieved by a computer program embodied in a memory medium of the present invention, which can be read by a computer in an information reproduction apparatus for generating an audio signal from audio information and outputting the audio signal. The computer program causes the computer to function as: a receiver device which receives output control information from another device that holds the output control information for controlling output of the audio signal output from the information reproduction apparatus to output lines; an output channel determination device which determines output channels for the audio signal based on the output control information received by the receiver device; an information acquisition device which acquires the audio information; a signal generation device which generates an audio signal corresponding to the output channels determined by the output channel determination device, from the audio information acquired by the information acquisition device; and a signal output device which outputs the audio signal generated by the signal generation device.

The above object of the present invention can be achieved by an information reproduction method of the present invention for an information reproduction system, the information reproduction system including an information reproduction apparatus for generating an audio signal from audio information and outputting the audio signal, an output apparatus for outputting the audio signal output from the information reproduction apparatus, to output lines, and an output control apparatus for storing output control information in order to control output of the audio signal in the output apparatus to the output lines, and controlling the output apparatus based on the output control information. The information reproduction method is provided with: a communicationprocess for transmitting the output control information from the output control apparatus and receiving the output control information in the information reproduction apparatus; an output channel determination process conducted in the information reproduction apparatus to determine output channels for the audio signal based on the output control information received in the communication process; an information acquisition process conducted in the information reproduction apparatus to acquire the audio information; a signal generation process conducted in the information reproduction apparatus to generate an audio signal corresponding to the output channels determined in the output channel determination process, from the audio information acquired in the information acquisition process; and a signal output process conducted in the information reproduction apparatus to output the audio signal generated in the signal generation process.
FIG. 1 is a block diagram showing a configuration of an information reproduction system according to an embodiment of the present invention;
FIG. 2 is a block diagram showing a configuration of a DVD multi-channel reproduction system according to the embodiment;
FIG. 3 is a block diagram showing a configuration of an output control section in an AV amplifier apparatus according to the embodiment;
FIG. 4 is a block diagram showing a configuration of a DVD player according to the embodiment;
FIG. 5 is a flow chart showing output control information reception processing in the embodiment;
FIG. 6 is a flow chart showing reproduction control processing in the embodiment; and
FIG. 7 is a flow chart showing reproduction control processing continued from FIG. 6.

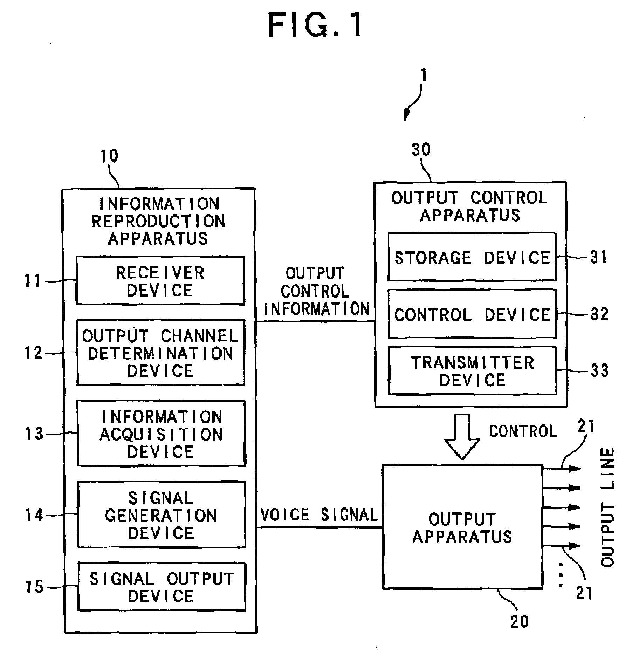

Hereafter, an embodiment of the present invention will be described with reference to FIG. 1.

First, the whole of an information reproduction system according to an embodiment of the present invention will be described. FIG. 1 shows a configuration of an information reproduction system according to an embodiment of the present invention. As shown in FIG. 1, an information reproduction system 1 according to an embodiment of the present invention includes an information reproduction apparatus 10 for generating an audio signal from audio information and outputting the audio signal, an output apparatus 20 for outputting the audio signal output from the information reproduction apparatus 10 to output lines 21, and an output control apparatus 30 for controlling output of the audio signal from the output apparatus 20 to the output lines 21.

The output apparatus 20 will now be described. The output apparatus 20 may be formed as, for example, a part of an amplifier of multi-channel corresponding type, or may be formed as a single output apparatus. A speaker is typically connected to an output end of each output line 21. When the output apparatus 20 has acquired an audio signal having a plurality of channels from the information reproduction apparatus 10, the output apparatus 20 distributes the audio signal among the output lines 21 from channel to channel. As a result, channels for the audio signal are supplied to speakers, respectively, and thus multi-channel reproduction is implemented. The number of output lines 21 differs depending upon specifications of the multi-channel reproduction. For example, in the case of an output apparatus corresponding to 5.1 channel surround reproduction, typically six output lines are provided. In the case of an output apparatus corresponding to 7.1 channel surround reproduction, typically eight output lines are provided. However, the number of output lines 21 is not limited to them. The audio signal supplied from the information reproduction apparatus 10 to the output apparatus 20 may be a digital signal or may be an analog signal.

The output control apparatus 30 will now be described. The output control apparatus 30 may have, for example, such a configuration that the output control apparatus 30 and the output apparatus 20 are incorporated integrally in one case as a multi-channel amplifier apparatus, or may be formed as a single apparatus. The output control apparatus 30 may be formed as a synthetic control apparatus for unifying the entire information reproduction system 1. The output control apparatus 30 includes a storage device 31 for storing output control information to control outputting of the audio signal to the output lines of the output apparatus 20, a control device 32 for controlling the output apparatus 20 based on the output control information stored in the storage device 31, and a transmission device 33 for transmitting the output control information stored in the storage device 31 to the outside.

Information that is conceivable as the output control information stored in the storage device 31 is, for example, the channel setting of audio output such as whether the output of the audio signal is set to a 2-channel stereo output or set to a 5.1 channel surround output, whether a speaker is connected to an output line in the output apparatus 20 (whether there is a speaker connection), and the size and position, output sound pressure level and frequency characteristics of a speaker connected to each output lines. The storage device 31 stores a part or the whole of these kinds of information as the output control information. The control device 32 controls the output apparatus 20 based on the output control information stored in the storage device 31. The transmission device 33 transmits the output control information stored in the storage device 31 to the outside. The transmissionmethodmay be wired or wireless.

The information reproduction apparatus 10 will now be described. The information reproduction apparatus 10 is a reproduction apparatus having a multi-channel reproduction function. The information reproduction apparatus 10 is a reproduction apparatus for reproducing information recorded on a recording medium, such as a DVD, a compact disk, an optical magnetic disk, or a magnetic memory, or a reproduction apparatus for reproducing information that can be received with television broadcasting or the Internet. The information reproduction apparatus 10 includes a receiver device 11 for receiving the output control information transmitted from the output control apparatus 30, an output channel determination device 12 for determining output channels for an audio signal based on the output control information received by the receiver device 11, an information acquisition device 13 for acquiring audio information, a signal generation device 14 for generating an audio signal corresponding to the output channels determined by the output channel determination device 12, from the audio information acquired by the information acquisition device 13, and a signal output device 15 for outputting the audio signal generated by the signal generation device 14.

The receiver device 11 receives the output control information transmitted from the output control apparatus 30. As for the transmission of the output control information from the output control apparatus 30 to the information reproduction apparatus 10, it is also possible to adopt a configuration in which the output control apparatus 30 automatically transmits the output control information when the connection between the output control apparatus 30 and the information reproduction apparatus 10 has been completed or when the power of the output control apparatus 30 and the information reproduction apparatus 10 has been turned on. Alternatively, it is also possible to adopt a configuration in which the information reproduction apparatus 10 requests the output control apparatus 30 to transmit the output control information, and the output control apparatus 30 transmits the output control information in response thereto. Alternatively, it is also possible to adopt a configuration in which the user operates the output control apparatus 30 and transmits the output control information. The method of reception may be wired or wireless.

The output channel determination device 12 determines output channels for the audio signal based on the output control information received by the receiver device 11. For example, when information of the output channel setting for the audio signal, such as whether the output of the audio signal in the output apparatus 20 is set to the 2-channel stereo output or set to the 5.1 channel surround output, is contained in the output control information, it is possible to adopt a configuration in which the output channel determination device 12 determines whether the output channels for the audio signal should be the 2-channel stereo or the 5.1 channel surround, based on the information of the output channel setting. When, for example, information concerning whether a speaker is connected to each output line 21 of the output apparatus 20, and concerning the size, position, output sound pressure level and frequency characteristics of the speaker is contained in the output control information, it is possible to adopt a configuration in which the output channel determination device 12 recognizes the states of respective output lines 21 of the output apparatus 20 and determines the output channels for the audio signal so as to conform to such states.

The information acquisition device 13 acquires audio information. For example, when audio information is recorded on a recording medium, such as a DVD, a compact disk or an optical magnetic disk, the information acquisition device 13 includes an information reading device, such as an optical pickup or a magnetic head, and reads audio information from the recording medium via the information reading device. When the audio information can be received by television broadcasting or the Internet, the information acquisition device 13 includes an interface for connection to these communication lines, and receives audio information via such an interface.

The signal generation device 14 generates an audio signal corresponding to the output channels determined by the output channel determination device 12, from the audio information. The signal output device 15 outputs the audio signal to the output apparatus 20.

In the information reproduction system 1 having the configuration heretofore described, the information reproduction apparatus 10 receives output control information for controlling outputting of an audio signal to the output lines 21 of the output apparatus 20, from the output control apparatus 30. Therefore, the information reproduction apparatus 10 can automatically recognize the output channel setting of the audio signal in the output apparatus 20 and the states of the respective output lines 21. As a result, it is possible to save the user's labor for inputting the output channel setting for the audio signal and setting of the connection states of speakers to the information reproduction apparatus 10 by operating operation switches on the information reproduction apparatus 10. Therefore, the stress imposed on the user can be lightened, and the multi-channel reproduction can be implemented easily.

Furthermore, the information reproduction apparatus 10 is formed so as to receive the output control information transmitted from the output control apparatus 30, automatically determine output channels for an audio signal, and generates an audio signal corresponding to the output channels. In the information reproduction apparatus 10, therefore, an audio signal conforming to the current states of output lines 21 of the current output apparatus 20 can be automatically generated. Therefore, it becomes possible to suitably reproduce audio information according to'the current states of the output lines 21 of the current output apparatus 20.

Various aspects of the information reproduction system 1 according to the present embodiment will now be described.

It is also possible to adopt a configuration in which the speaker connection information indicating whether a speaker is connected to an output line 21 of the output apparatus 20 is contained in the output control information and the output channel determination device 12 in the information reproduction apparatus 10 determines whether a speaker is connected to an output line 21 based on the speaker connection information contained in the output control information, and determines output channels for an audio signal based on a result of the decision. For example, when only the left-hand front speaker and the right-hand front speaker are connected to two output lines 21 among a plurality of output lines 21 of the output apparatus 20 and speakers are not connected to remaining output lines 21, the output channel determination device 12 recognizes to that effect based on the speaker connection information, and determines two channels, i.e. front L and front R, as the output channels for the audio signal.

As a result, the information reproduction apparatus 10 can recognize output lines 21 to which audio can be output, and the user's labor for inputting setting of the speaker connection state can be saved. In addition, the information reproduction apparatus 10 can generate and output an audio signal conforming to the current states of the output lines 21 of the current output apparatus 20.

The information reproduction apparatus 10 may further have a request device for requesting the output control apparatus 30 to transmit the output control information. In this case, the output control apparatus 30 transmits the output control information in response to a request issued by the request device in the information reproduction apparatus 10.

As a result, transmission and reception of the output control information between the information reproduction apparatus 10 and the output control apparatus 30 can be conducted certainly.

It is also possible to adopt a configuration in which the information reproduction apparatus 10 and the output control apparatus 30 are connected to each other by a bus. In this case, the transmission device 33 in the output control apparatus 30 transmits the output control information through the bus, and the receiver device 11 in the information reproduction apparatus 10 receives the output control information through the bus.

As a result, communication between the information reproduction apparatus 10 and the output control apparatus 30 can be implemented easily by using a shared bus for connecting devices included in the system.

In some cases, the audio information contains audio substance information which is information concerning the audio itself, and output channel indication information which indicates output channels for an audio signal generated from the audio substance information. The output channel indication information is, for example, information indicating output channels specified or recommended by a creator of the audio information in order to conduct multi-channel reproduction on the audio substance information. The output channel indication information is, in some cases, information indicating specific output channel setting, such as the information that the first channel should be output to the left-hand front and the second channel should be output to the right-hand front. In some cases, the output channel indication information is information that indicates only the number of channels. For example, in the case of DVD movie software corresponding to the 5.1 channel surround, audio substance information of a plurality of channels corresponding to the 5.1 channel surround reproduction and specific output channel setting for implementing the 5.1 channel surround reproduction are recorded.

When the audio information has such a configuration, the signal reproduction device 14 in the information reproduction apparatus 10 may include a decision device for comparing output channels indicated by the output channel indication information contained in the audio information acquired by the information acquisition device 13 with output channels determined by the output channel determination device 12, and effecting a conformity decision as to whether both output channels conform to each other, and a synthesis device for conducting signal synthesis processing in order to make the output channels for the audio signal conform to each other, in generating an audio signal from audio substance information contained in the audio information, when the output channels indicated by the output channel indication information do not conform to the output channels determined by the output channel determination device.

According to the signal generation device 14 having such a configuration, an audio signal that conforms to the connection states of the output lines 21 can be generated in the information reproduction apparatus 10. As a result, the audio information can be reproduced according to the current states of the output lines 21 of the output apparatus 20. Therefore, a situation that a part of the audio information is not output, and a situation that noise is output can be prevented.

In some cases, the audio information is divided into audio information units, and output channel indication information which indicates an output channel for each audio information unit, is contained.

For example, in the case of a DVD based on the DVD audio standards, information required for reproducing, for example, music is divided into units each called ATS (audio title set) and recorded. One or more (a maximum of 99) ATSs can be recorded on an audio zone of a DVD. Audio substance information (presentation data) that forms music and various kinds of control information (navigation data) for controlling the reproduction of the audio substance information are contained in each ATS. PGCI (program chain information) is contained in the navigation data. For example, audio substance information that forms a piece of music (a track) is related by the PGCI, and one substantial piece of music information is formed. Such a substantial piece of music information is called PG (program). It can be considered that the PG is equivalent to the audio information unit.

According to the DVD audio standards, control information that indicates the output channels for audio substance information contained in its own ATS is recorded in each ATS as one of navigation data. This control information is equivalent to the output channel indication information. When one PG is constructed by PGCI contained in one ATS, output channels for the audio substance information relating to the PG are scheduled to be set by the output channel indication information contained in the one ATS.

When audio information has such a configuration, the signal generation device 14 in the information reproduction apparatus 10 may be formed so as to conduct the conformity decision processing and the signal synthesis processing based on output channel indication information corresponding to an audio information unit whenever reproducing each audio information unit. For example, when starting reproduction of an individual audio information unit, the signal generation device 14 conducts the conformity decision processing and the signal synthesis processing.

As a result, an audio signal of output channels that conforms to the current states of the output lines 21 of the output apparatus 20 can be generated every individual audio information unit. Even if output channels indicated by output channel indication information corresponding to each audio information unit differ every audio information unit, therefore, individual audio information units can be suitably reproduced. Furthermore, since suitable output channels are automatically set every individual audio information unit, the user' s labor for inputting the setting can be saved.

In some cases, audio information contains synthesis processing permission/prohibition information which indicates whether signal synthesis processing is permitted. In this case, the signal generation device 14 in the information reproduction apparatus 10 may be formed so as to decide whether signal synthesis processing is permitted based on the synthesis processing permission/prohibition information contained in the audio information acquired by the information acquisition device 13, and conduct signal synthesis processing only when the signal synthesis processing is permitted according to a result of the decision.

As a result, signal synthesis processing can be conducted on only audio information for which signal synthesis processing is permitted.

The embodiment heretofore described may be implemented so as to be formed integrally with hardware as a dedicated system or device, or may be implemented by making a computer read a program.

### (Example)

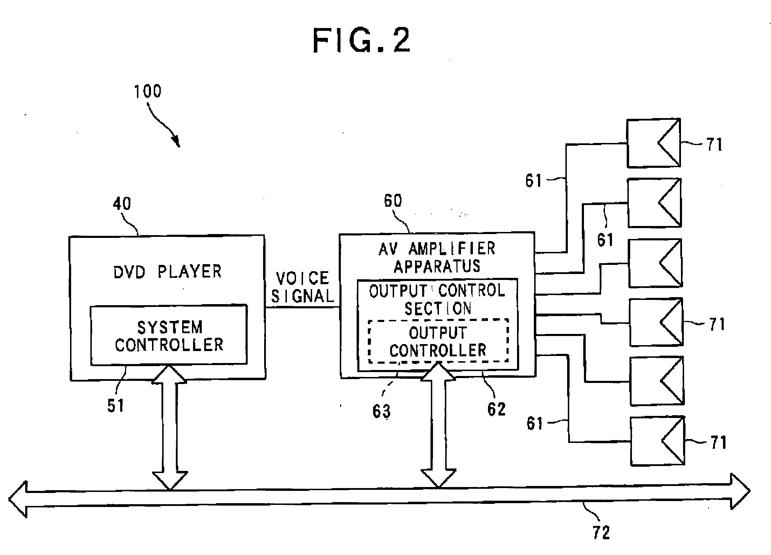

Hereafter, an embodiment of the present invention will be described with reference to FIGS. 2 to 7. In the embodiment described hereafter, an information reproduction system according to the present invention is applied to a DVD multi-channel reproduction system, and an information reproduction device according to the present invention is applied to a DVD player.

First, a DVD multi-channel reproduction system according to an embodiment of the present invention will now be described with reference to FIG. 2.

FIG. 2 shows a configuration of a DVD multi-channel reproduction system according to the embodiment. As shown in FIG. 2, a DVD multi-channel reproduction system according to the embodiment includes a DVD player 40 and a multi-channel AV amplifier apparatus 60.

The DVD player 40 has a multi-channel reproduction function. The DVD player 40 is an information reproduction device for reading audio data recorded on a DVD, generating an audio signal from the audio data, and outputting the audio signal to the AV amplifier apparatus 60. The DVD player 40 can reproduce both data based on the DVD audio standards and data based on the DVD video standards.

The AV amplifier apparatus 60 is an output device for receiving the audio signal output from the DVD player 40, distributing the audio signal among six output lines 61, 61, ... , and thus outputting the distributed signal. Six speakers 71, 71, ... are connected to output ends of the output lines 61 of the AV amplifier apparatus 60. Specifically, these speakers are a left-hand front speaker, a right-hand front speaker, a center speaker, a sub-woofer, a left-hand rear speaker, and a right-hand rear speaker. The audio signal output to the output lines 61 of the AV amplifier apparatus 60 is supplied to these speakers 71.

An output control section 62 is provided in the AV amplifier apparatus 60. The output control section 62 controls outputting of the audio signal to the output lines 61 in the AV amplifier apparatus 60.

The DVD player 40 (a system controller 51) and the AV amplifier apparatus 60 (an output controller 63 in the output control section 62) are connected to each other via a shared 72. The DVD player 40 and the AV amplifier apparatus 60 conduct mutual communication via the shared bus 72. For example, other devices, such as tuners, compact disk players and personal computers, can be connected to the shared bus 72. When these devices are connected to the shared bus 72, it becomes possible to conduct information communication between these devices, and the DVD player 40 and the AV amplifier apparatus 60, as well.

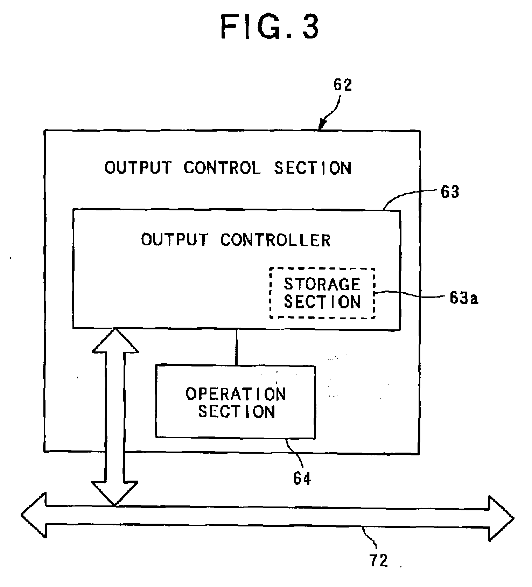

The output control section 62 in the AV amplifier apparatus 60 will now be described with reference to FIG. 3.

FIG. 3 shows a configuration of the output control section 62 provided in the AV amplifier apparatus 60. As shown in FIG. 3, the output control section 62 includes an output controller 63 and an operation section 64. The output controller 63 includes an arithmetic operation circuit and a storage circuit, such as a CPU (central processing unit) and a ROM (read only memory). A storage section 63a including a rewritable storage circuit, such as a RAM (random access memory), is provided in the output controller 63. The output controller 63 is connected to the shared bus 72. The operation section 64 is a user interface which makes it possible for the user to operate the output control section 62, and includes operation switches.

In the output control section 62 having such a configuration, the output controller 63 stores output control information for controlling outputting of the audio signal to the output lines 61 in the AV amplifier apparatus 60. Speaker connection information which indicates whether a speaker is connected to each output line 61 (i.e., whether there is a speaker connection in each output line 61), is contained in the output control information.

For example, in a stage of preparation for reproduction from a DVD by using the DVD multi-channel reproduction system 100, the user installs the above-described six speakers 71 in a room, and connects the speakers 71 to the output lines 61 of the AV amplifier apparatus 60, respectively. Further, the user inputs setting to the effect that the speakers 71 have been connected to the output lines 61, by using the operation section 64 in the output control section included in the AV amplifier apparatus 60. The output controller 63 stores contents of the setting input, i.e., the speaker connection information in the storage section 63a as a part of the output control information.

It is also possible to adopt a configuration in which the user is requested to input setting not only as to the speaker connection information, but also as to output channel setting of the audio signal (for example, selection setting as to whether the 2-channel stereo is to be performed or the 5.1 channel surround is to be performed) and the size, position, output sound pressure level, and frequency characteristics of the speakers, and their setting contents are stored in the storage section 63a as a part of the output control information. It is also possible to adopt a configuration in which the AV amplifier apparatus 60 is provided with an automatic sound field setting function, and setting concerning whether there is a speaker connection and concerning positions of the speakers is automatically conducted, the contents of the setting being stored in the storage section 63a as the output control information.

The output controller 63 controls outputting of the audio signal to the output lines 61 in the AV amplifier apparatus 60 based on the output control information stored in the storage section 63a.

The output controller 63 transmits the output control information stored in the storage section 63a in response to a request issued by the DVD player 40.

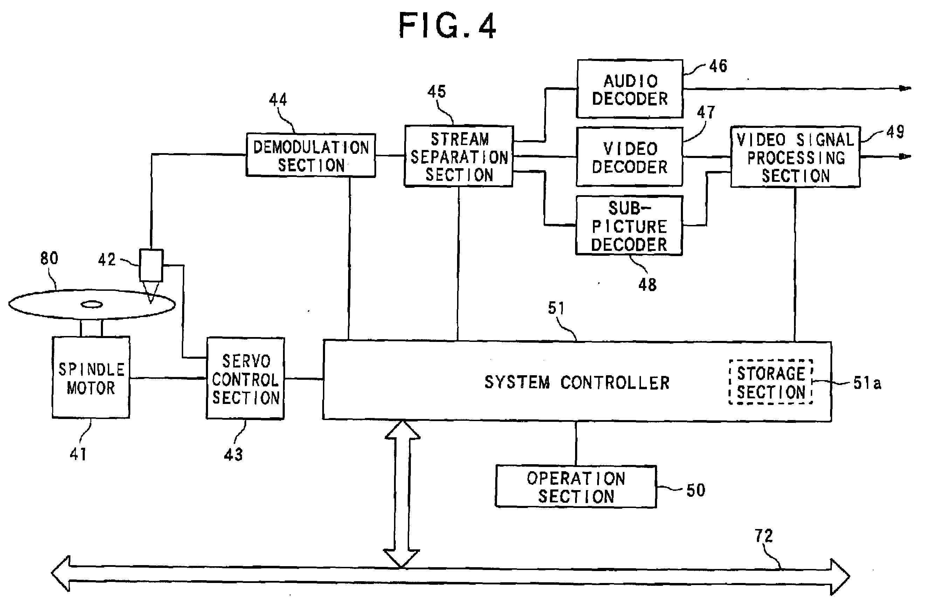

A configuration of the DVD player 40 will now be described with reference to FIG. 4.

FIG. 4 shows a configuration of the DVD player 40 according to the present embodiment. As shown in FIG. 4, the DVD player 40 includes a spindle motor 41, an optical pickup 42, a servo control section 43, a demodulation section 44, a stream separation section 45, an audio decoder 46, a video decoder 47, a sub-picture decoder 48, a video signal processing section 49, an operation section 50, and a system controller 51.

The spindle motor 41 is a motor for rotating a DVD 80. The optical pickup 42 functions to apply an optical beam to a recording surface of the DVD 80 and read a data signal recorded on the DVD 80. The servo control section 43 is a control circuit for controlling the rotation of the spindle motor 41 and the irradiation position of the optical pickup 42.

The demodulation section 44 is a circuit for demodulating the data signal read by the optical pickup 42. The stream separation section 45 is a circuit for extracting audio data (audio substance information), dynamic picture data and caption data, separating them, and outputting the audio data to the audio decoder 46, the dynamic picture data to the video decoder 47 and the caption data to the sub-picture decoder 48.

The audio decoder 46 is a circuit for decoding audio data encoded and recorded on the DVD 80 and generating an audio signal. If software recorded on the DVD 80 is, for example, software corresponding to the 5.1 channel surround reproduction, then, for example, 6-channel audio data is recorded on the DVD 80. When reproducing such a DVD 80, the audio decoder 46 receives the 6-channel audio data', and generates a 6-channel audio signal. In addition, the audio decoder 46 not only thus generates the audio signal from the audio data without changing the number of channels, but also has a function of signal synthesis processing in a process of generating the audio signal from the audio data and thereby reducing the number of channels for the audio signal. Such signal synthesis processing is called down-mix processing.

The video decoder 47 is a circuit for decoding dynamic picture data. The sub-picture decoder 48 is a circuit for decoding caption data. The video signal processing section 49 is a circuit for combining the decoded dynamic picture output and capture output.

The operation section 50 is a user interface that makes it possible for the user to operate the DVD player 40. The operation section 50 includes operation switches and a remote controller.

The system controller 51 includes an arithmetic operation circuit and a storage circuit, such as a CPU and a ROM. The system controller 51 conducts synthetic control on the DVD player 40, and conducts output control information reception processing and reproduction control processing described later. The system controller 51 includes a storage section 51a including a rewritable storage circuit, such as a RAM. The system controller 51 is connected to the shared bus 72.

If the user has loaded the DVD 80 on the DVD player 40 having such a configuration, then the DVD 80 is rotated by the spindle motor 41 under the control of the servo control section 43, and the data signal recorded on the DVD 80 is read by the optical pickup 42. The data signal read by the optical pickup 42 is demodulated by the demodulation section 44, and supplied to the stream separation section 45. Further, audio data is extracted from the data signal by the stream separation section 45. The audio data is supplied to the audio decoder 46, decoded by the audio decoder 46, and output to the AV amplifier apparatus 60 as an audio signal for the digital signal. In the AV amplifier apparatus 60, the audio signal is subjected to D-A (digital-analog) conversion every channel and output to the speakers 71 through the output lines 61.

A structure of data recorded on the DVD 80 will now be described. The audio data recorded on the DVD 80 has a structure based on the DVD audio standards or the DVD video standards.

A data structure based on the DVD audio standards is similar in basic structure to a data structure based on the DVD video standards, but differs from that in fine details. Hereafter, therefore, the data structure based on the DVD audio standards and the data structure based on the DVD video standards will be described.

First, the data structure based on the DVD audio standards will now be described. According to the DVD audio standards, data required to reproduce, for example, music is divided into units each called ATS (audio title set) and recorded. One or more (a maximum of 99) ATSs can be recorded on an audio zone of a DVD. For example, audio data (presentation data) that forms the substance of music and various kinds of control information (navigation data) for controlling the reproduction of the audio data are contained in each ATS. PGCI (program chain information) is contained in the navigation data. For example, audio data that forms a piece of music (a track) is related by the PGCI, and one substantial piece of music information is formed. Such a substantial piece of music information is called PG (program).

According to the DVD audio standards, output channel indication information that indicates output channels for audio data contained in its own ATS is recorded in each ATS as one of navigation data. When one PG is formed of PGCI contained in one ATS, output channels for the audio data relating to the PG are scheduled to be set by the output channel indication information contained in the one ATS.

The output channel indication information will now be described more specifically. The output channel indication information is information that indicates an output channel specified or recommended by the contents creator with respect to audio data relating to the PG. For example, when audio data relating to the PG corresponds to the 5.1 channel surround, the audio data relating to the PG has six channels. In this case, the output channel indication information contains information indicating that the output channels should be set so as to output the first channel among the six channels to the left-hand front, the second channel to the right-hand front, the third channel to the center, the fourth channel to the left-hand rear, the fifth channel to the right-hand rear, and the sixth channel to the sub-woofer.

The output channel indication information exists in each ATS. When a plurality of ATSs are recorded on a DVD, output channel indication information indicating different output channels can be recorded for each ATS. In this case, output channels that should be set for audio data relating to a PG formed based on one ATS differ from output channels that should be set for audio data relating to a PG formed based on another ATS.

According to the DVD audio standards, synthesis processing permission/prohibition information that indicates whether down mix processing conducted by the audio decoder 46 is permitted or prohibited is added to the audio data relating to each PG. The synthesis processing permission/prohibition information exists for each PG. Therefore, it is possible to permit the down mix processing for audio data relating to one PG and prohibit the down mix processing for audio data relating to another PG, based on the synthesis processing permission/prohibition information.

According to the DVD audio standards, the output channel indication information is recorded in a management table (AMGI_MAT) contained in AMGI (audio manager information) which exists in an AMG (audio manager), and in a management table (ATSI_MAT) contained in ATSI (audio title set information) which exists in an ATS. The synthesis processing permission/prohibition information is recorded in ATSI_PGCI (program chain information) contained in the ATSI.

The data structure based on the DVD video standards will now be described. According to the DVD video standards, data required to reproduce, for example, a movie is divided into units each called VTS (video title set) and recorded. One or more (a maximum of 99) VTSs can be recorded on a video zone of a DVD. Audio data, dynamic picture data and caption data (presentation data) that form a movie and various kinds of control information (navigation data) for controlling the reproduction of these data are contained in each VTS. PGCI (program chain information) is contained in the navigation data. For example, audio data, dynamic picture data and caption data that form one title of a movie are related by the PGCI, and one substantial piece of movie information is formed. Such a substantial piece of movie information is called PGC (program chain). It is also possible to form one title of a plurality of PGCs.

According to the DVD video standards, output channel indication information that indicates output channels for audio data contained in its own VTS is recorded in each VTS as one of navigation data. When one PGC is formed of PGCI contained in one VTS, output channels for the audio data relating to the PGC are scheduled to be set by the output channel indication information contained in the one VTS. By the way, unlike the output channel indication information based on the DVD audio standards, only the number of channels set in the audio data is simply described in the output channel indication information based on the DVD video standards.

The output channel indication information exists in each VTS. When a plurality of VTSs are recorded on a DVD, therefore, output channel indication information indicating different output channels can be recorded for each VTS. In this case, output channels set for audio data relating to a PGC formed based on one VTS differ from output channels set for audio data relating to a PGC formed based on another VTS.

According to the DVD video standards, it is possible to make one PGC contain a plurality of kinds of audio data scheduled to be selectively reproduced. For example, when the PGC is a movie, it is possible to make the PGC contain English audio data and Japanese audio data. As a result, the user can select and reproduce either English or Japanese as the caption of the movie. When the PGC has such a configuration, output channel indication information corresponding to each of a plurality of kinds of audio data exists. Further, the output channels (the number of channels) indicated by output channel indication information may vary. For example, it is possible to set the English caption of a movie to the 5.1 surround reproduction (six channels) and set the Japanese caption of the movie to the front L/front R stereo reproduction (two channels).

According to the DVD video standards, the output channel indication information is recorded in a management table (VMGI_MAT) contained in VAGI (video manager information) which exists in a VMG (video manager), and in a management table (VTSI_MAT) contained in VTSI (video title set information) which exists in a VTS.

In data based on the DVD video standards, the synthesis processing permission/prohibition information does not exist.

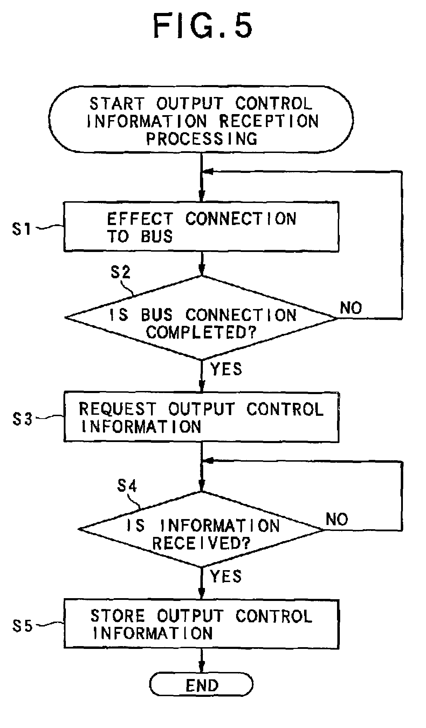

Output control information reception processing executed by the system controller 51 in the DVD player 40 will now be described with reference to FIG. 5.

FIG. 5 shows output control information reception processing. When power for the DVD player 40 is turned on, the system controller 51 conducts processing for connection to the shared bus 72 (step S1).

If the connection processing is completed (YES at step S2), the system controller 51 requests a device connected to the shared bus 72 to transmit the output control information (step S3).

The output controller 63 in the output control section 62 provided in the AV amplifier apparatus 60 is connected to the shared bus 72. The output control information is stored in the storage section 63a in the output controller 63. The output controller 63 transmits the output control information stored in the storage section 63a in response to a request transmitted from the system controller 51. The output control information transmitted from the output controller 63 is supplied to the system controller 51 in the DVD player 40 via the shared bus 72.

If the system controller 51 receives the output control information from the output controller 63 (YES at step S4), then the system controller 51 stores the output control information in the storage section 51a (step S5). The output control information reception processing is thus finished.

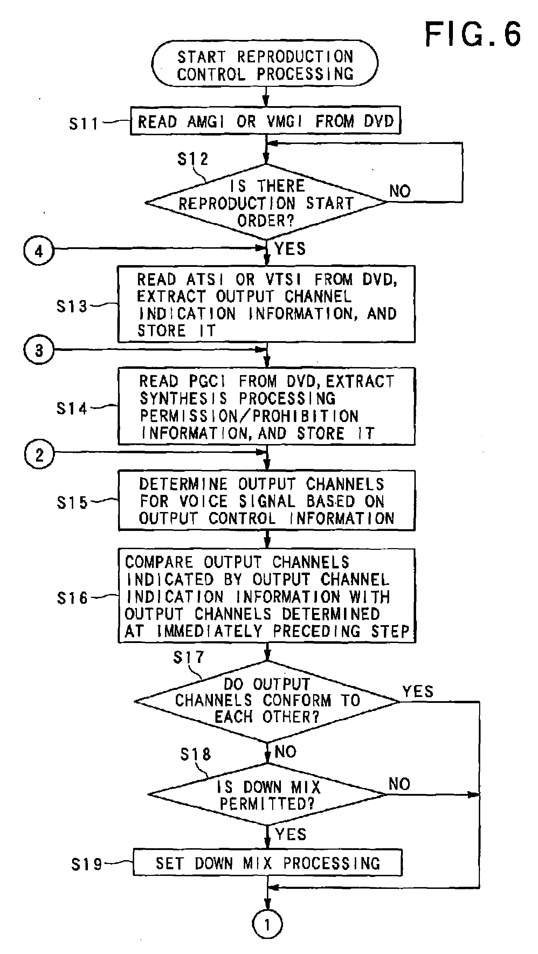

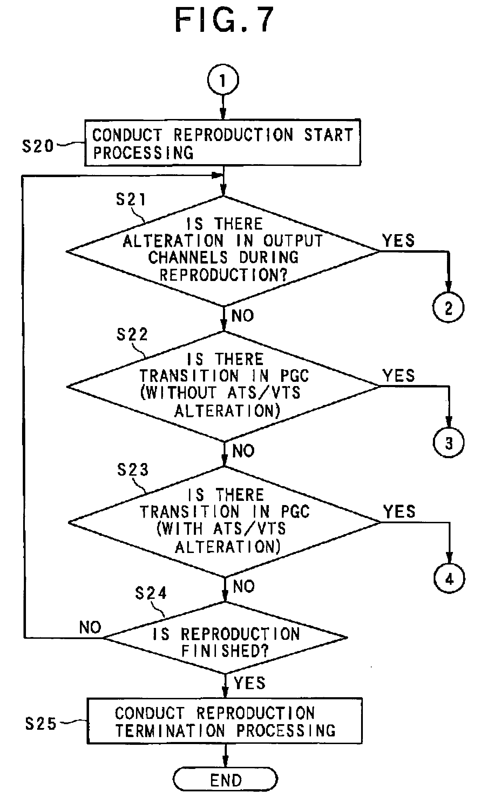

Reproduction control processing executed by the system controller 51 in the DVD player 40 will now be described with reference to FIGS. 6 and 7.

FIGS. 6 and 7 show reproduction control processing. If the DVD 80 is loaded on the DVD player 40, then the system controller 51 starts the reproduction control processing.

If data recorded on the DVD 80 is data based on the DVD audio standards, then the system controller 51 first reads the AMGI from the DVD 80. On the other hand, if data recorded on the DVD 80 is data based on the DVD video standards, then the system controller 51 reads the VMGI from the DVD 80 (step S11).

If the user then selects a track or title to be reproduced by using the operation section 50 and inputs a reproduction start order to the DVD player 40, then the system controller 51 recognizes this (YES at step S12) and identifies a PGC corresponding to the selected track or title as a subject of reproduction.

The system controller 51 reads the ATSI or VTSI contained in the ATS or VTS that becomes the basis of the PGC identified as the subject of reproduction, from the DVD 80. Further, the system controller 51 extracts the output channel indication information contained in the ATSI or VTSI, and stores the output channel indication information in the storage section 51a (step S13).

If data recorded on the DVD 80 is data based on the DVD video standards, then a plurality of kinds of audio data (such as Japanese audio data and English audio data) scheduled to be selectively reproduced are contained in one PGC in some cases. In this case, output channel indication information exists for each of a plurality of kinds of audio data as described above. If the PGC selected by the user as the subject of reproduction is such a PGC that contains a plurality of kinds of audio data, the system controller 51 extracts output channel indication information corresponding to each of a plurality of kinds of audio data, from the VTSI, and stores it in the storage section 51a.

Subsequently, the system controller 51 reads the PGCI (program chain information) from the DVD 80. If data recorded on the DVD 80 is data based on the DVD audio standards, then the synthesis processing permission/prohibition information is contained in the PGCI. In this case, the system controller 51 extracts the synthesis processing permission/prohibition information from the PGCI, and stores it in the storage section 51a (step S14).

Subsequently, the system controller 51 refers to the output control information stored in the storage section 51a in the output control information reception processing (see FIG. 5), and determines output channels for the audio signal based on the output control information (step S15). In other words, speaker connection information that indicates whether speakers are respectively connected to the output lines 61 of the AV amplifier apparatus 60, is contained in the output control information. The system controller 51 refers to the speaker connection information, guesses the states of the output lines 61 of the AV amplifier apparatus 60, and determines output channels for the audio signal so as to conform to the states of the output lines 61. More specifically, the system controller 51 refers to the speaker connection information, and guesses output lines 61 among the output lines 61 that can correctly output the audio signal. Further, the system controller 51 determines output channels for the audio signal so as to suitably output channels for the audio signal to the output lines 61 that can output. For example, when only the left-hand front speaker and the right-hand front speaker are connected to two output lines 61 among the output lines 61 of the AV amplifier apparatus 60 and speakers are not connected to remaining output lines 61, the systemcontroller 51 recognizes to that effectbased on the speaker connection information, and determines two channels, i.e., the front L and front R channels as the output channels for the audio signal.

Subsequently, the system controller 51 refers to the output channel indication information stored in the storage section 51a at the step S13, compares output channels indicated by the output channel indication information with output channels determined based on the speaker connection information at the step S15 (step S16), and decides whether those output channels conform to each other (step S17).

When the output channels indicated by the output channel indication information conform to the output channels indicated by the output channel indication information as a result of the decision (YES at the step S17), the system controller 51 advances the processing to step S20 shown in FIG. 7.

On the other hand, if the output channels determined based on the speaker connection information at the step S15 do not conform to the output channels indicated by the output channel indication information as a result of the decision effected at the step S17, then the system controller 51 refers to the synthesis processing permission/prohibition information stored in the storage section 51a at the step S14. The system controller 51 decides whether it is permitted to conduct down mix processing on the audio data relating to the PG that is currently the subj ect of reproduction (step S18).

If it is found as a result of the decision that it is permitted to conduct the down mix processing on the audio data relating to the PG that is currently the subject of reproduction (YES at the step S18), then the system controller 51 performs setting for conducting the down mix processing. Specifically, the system controller 51 performs setting for the down mix processing by controlling the audio decoder 46 (step S19).

On the other hand, if it is found as the result of the decision that it is prohibited to conduct the down mix processing on the audio data relating to the PG that is currently the subj ect of reproduction (NO at the step S18), then the system controller 51 advances the processing to step S20 shown in FIG. 7 without performing the setting for the down mix processing.

When the data recorded on the DVD 80 is data based on the DVD video standards, the synthesis processing permission/prohibition information does not exist in the first place, and consequently the synthesis processing permission/prohibition information does not exist in the storage section 51a. In this case, the decision at the step S18 always becomes "YES," and the setting for the down mix processing is performed at the step S19.

Subsequently, at the step S20 shown in FIG. 7, the system controller 51 conducts reproduction start processing. As a result, the audio data recorded on the DVD 80 is decoded by the audio decoder 46, and converted to an audio signal. If at this time the setting for the down mix processing has been performed at the step S19, then the down mix processing is executed.

Subsequently, the system controller 51 determines whether there has been an alteration in the output channels during the reproduction (step S21). In other words, if the data recorded on the DVD 80 is data based on the DVD video standards and a plurality of kinds of audio data (such as English and Japanese) are contained in one PGC, then it is possible to alter the audio data during reproduction of the PGC. For example, the user can switch over caption of a movie from English to Japanese during reproduction of the movie by operating the operation section 50 for the DVD player 40. If in this case output channels scheduled for a plurality of kinds of audio data contained in the PGC (output channels indicated by pieces of output channel indication information corresponding to respective audio data) differ from each other, then an alteration in output channels (i.e., necessity for re-setting) is caused by an alteration of the audio data. The system controller 51 senses this and effects a decision at the step S21.

If there is an alteration in output channels during the reproduction (YES at the step S21), then the system controller 51 returns the processing to the step S15 shown in FIG. 6, and conducts processing of the step S15 and subsequent steps based on output channel indication information corresponding to the audio data obtained after the alteration.

On the other hand, if there is no alteration in output channels during the reproduction (NO at the step S21), then the system controller 51 decides whether there has been a transition in PGC (steps S22 and S23). For example, if the user alters the track or title to be reproduced by operating the operation section 50 for the DVD player 40 during reproduction of one PGC, the PGC that becomes the subject of reproduction makes atransition to another PGC.

When there are a plurality of PGCs, there are the case where one PGC and another PGC are based on a common ATS (VTS), and the case where one PGC and another PGC are based on mutually different ATSs (VTSs). If there is a transition from one PGC to another PGC when one PGC and another PGC are based on a common ATS (VTS), then the PGC that becomes the subject of reproduction is altered, but the ATS (VTS) that becomes the basis of reproduction is not altered. This means that a transition from one PGC to another PGC causes an alteration in the synthesis processing permission/prohibition information (only in the case of data based on the DVD audio standards), but it does not cause an alteration in output channel indication information. Because synthesis processing permission/prohibition information exists for each PGC, but output channel indication information exists for each ATS (VTS). On the other hand, If there is a transition from one PGC to another PGC when one PGC and another PGC are based on mutually different ATSs (VTSs), then the PGC that becomes the subject of reproduction is altered, and in addition the ATS (VTS) that becomes the basis of reproduction is also altered. This means that a transition from one PGC to another PGC causes an alteration in the synthesis processing permission/prohibition information (only in the case of data based on the DVD audio standards), and an alteration in output channel indication information.

Taking this into consideration, the system controller 51 returns the processing to the step S14 shown in FIG. 6 and conducts processing of reading the PGCI and subsequent processing, when there has been a transition in PGC, but the ATSs or VTSs that become the basis for both PGCs are common and consequently there is no alteration in the ATS or VTS that becomes the basis for reproduction (YES at the step S22).

On the other hand, if the ATS or VTS that becomes the basis for reproduction is altered by a transition in PGC (NO at the step S22 and YES at the step S23), then the system controller 51 returns the processing to the step S13 shown in FIG. 6, and conducts processing of reading the ATSI or VTSI contained in the ATS or VTS after the alteration and subsequent processing.

Subsequently, the system controller 51 decides whether reproduction has been finished (step S24). If the reproduction is not yet finished (NO at step S24), then the system controller 51 returns the processing to the step S21, and repeats the processing of the steps S21 to S24 until the reproduction is finished.

On the other hand, if the reproduction is finished (YES at the step S24), then the system controller 51 conducts reproduction termination processing (step S25) and terminates the reproduction control processing.

In the configuration of the DVD multi-channel reproduction system 100 according to the embodiment heretofore described, the system controller 51 in the DVD player 40 receives output control information from the output controller 63 in the output control section 62 included in the AV amplifier apparatus 60, and determines the output channels for the audio signal based on the output control information. In the DVD player 40, therefore, it is possible to automatically recognize or guess the output channel setting for the audio signal and connection states of the speakers in the AV amplifier apparatus 60, and it is possible to automatically determine output channels that conform to these setting and states. As a result, the labor of the user required for inputting the setting of output channels for the audio signal and the setting of the connection states of the speakers to the DVD player 40 by operating the operation section 50 for the DVD player 40 can be saved. Therefore, the stress imposed on the user can be lightened, and the multi-channel reproduction can be easily implemented.

Furthermore, in the configuration of the system controller 51 in the DVD player 40, the output channels for the audio signal are determined based on the speaker connection information contained in -the output control information. In the system controller 51, therefore, it ispossibleto guess whether a speaker is connected to each output line 61 of the AV amplifier apparatus 60, and it is possible to determine output channels for the audio signal that conform to the current states of the output lines 61. As a result, an audio signal depending upon the current states of the output lines 61 can be generated, and audio data can be suitably reproduced. For example, it is supposed that DVD movie software corresponding to 5.1-channel surround is reproduced by the DVD player 40 when only the left-hand front speaker and the right-hand front speaker are connected to two output lines 61 among the output lines 61 of the AV amplifier apparatus 60. In this case, output channels for 2-channel stereo reproduction are set in the DVD player 40 based on the speaker connection information, and down mix processing is conducted in the audio decoder 46. A 2-channel audio signal is thus generated and output to the AV amplifier apparatus 60. Therefore, it is possible to prevent malfunctions, such as malfunction that the caption of the movie is not output, from being caused.

The system controller 51 in the DVD player 40 compares output channels indicated by the output channel indication information with output channels determined based on the output control information, conducts conformity decision processing between both output channels, and conducts setting of down mix processing when the conformity has not been obtained. The system controller 51 conducts the decision and setting every PG or PGC CATS or VTS which becomes the basis for PGC). Owing to such a configuration, an audio signal conforming to the states of the output lines 61 of the AV amplifier apparatus 60 can be generated every PG or PGC. Therefore, audio data can be reproduced suitably every PG or PGC.

When a plurality of kinds of audio data are contained in one PGC, the system controller 51 in the DVD player 40 conducts the setting of the conformity decision processing and down mix processing each time audio data is alteredduring the reproduction. Owing to the configuration, an audio signal conforming to the states of the output lines 61 of the AV amplifier apparatus 60 can be generated for each of the kinds of audio data. Even if the audio data is altered during the reproduction, therefore, audio data can be reproduced suitably.

Furthermore, the system controller 51 in the DVD player 40 decides down mix processing is permitted every PG. Reproduction of audio data according to the current states of the output lines 61 can be implemented every PG without departing from the intent of the contents creator.

In the above-described embodiment, the DVD player serving as the information reproduction device receives the output control information from the AV amplifier device in which the output control device and the output device are formed as one body. However, a device from which the information reproduction device receives the output control information, i.e., a device that transmits the output control information to the information reproduction device is not especially restricted, but may be any device so long as it holds the output control information.

Furthermore, the present invention can be suitably changed without departing from the spirit or concept of the invention that can be read from claims and the whole specification. An information reproduction system, information reproduction device, and information reproduction method including such a change, and a computer program for implementing these functions are also included in the technical concept of the present invention.

## Claims

1. An information reproduction system (1, 100) comprising:
an information reproduction apparatus (10, 40) which generates an audio signal from audio information and outputting the audio signal;
an output apparatus (20, 60) which outputs the audio signal output from the information reproduction apparatus (10, 40), to output lines (21, 61); and
an output control apparatus (30, 62) which controls output of the audio signal in the output apparatus (20, 60) to the output lines (21, 61),
wherein
the output control apparatus (30, 62) comprises:
a storage device (31, 63a) which stores output control information in order to control output of the audio signal in the output apparatus (20, 60) to the output lines (21, 61);
a control device (32, 63) which controls the output apparatus (20, 60) based on the output control information stored by the storage device (31, 63a); and
a transmitter device (33, 63) which transmits the output control information stored by the storage device (31, 63a) to outside, and
the information reproduction apparatus (10, 40) comprises:
a receiver devi ce (11, 51) which receives the output control information transmitted from the output control apparatus (30, 62);
an output channel determination device (12, 51) which determines output channels for the audio signal based on the output control information received by the receiver device (11, 51);
an information acquisition device (13, 51) which acquires the audio information;
a signal generation device (14, 46, 51) which generates an audio signal corresponding to the output channels determined by the output channel determination device (12, 51), from the audio information acquiredby the information acquisition device (13, 51); and
a signal output device (15, 46) which outputs the audio signal generated by the signal generation device (14, 46, 51).

2. The information reproduction system (1, 100) according to claim 1, wherein
the output control information contains speaker connection information which indicates whether speakers (71) are connected to the output line (21, 61) of the output apparatus (20, 60), and
in the information reproduction apparatus (10, 40), the output channel determination device (12, 51) decides whether speakers (71) are connected to the output lines (21, 61), based on the speaker connection information contained in the output control information, and determines output channels for the audio signal based on a result of the decision.

3. The information reproduction system (1, 100) according to claim 1, wherein the information reproduction apparatus (10, 40) further comprises a request device (51) which requests the output control apparatus (30, 62) to transmit the output control information.

4. The information reproduction system (1, 100) according to claim 1, wherein
the information reproduction apparatus (10, 40) and the output control apparatus (30, 62) are connected to each other via a bus (72),
the transmitter device (33, 63) in the output control apparatus (30, 62) transmits the output control information via the bus (72), and
the receiver device (11, 51) in the information reproduction apparatus (10, 40) receives the output control information via the bus (72).

5. The information reproduction system (1, 100) according to claim 1, wherein
the audio information contains audio substance information which is information concerning audio itself, and output channel indication information which indicates output channels for an audio signal generated from the audio substance information,
the signal generation device (14, 46, 51) in the information reproduction apparatus (10, 40) comprises:
a decision device (14, 51) which compares the output channels indicated by the output channel indication information contained in the audio information acquired by the information acquisition device (13,51) , with the output channels determined by the output channel determination device (12, 51) , and conducts conformity decision processing to decide whether those output channels conform to each other; and
a synthesis device (14, 46), responsive to nonconformity of the output channels indicated by the output channel indication information to the output channels determined by the output channel determination device in a result of a decision effected by the decision device (14, 51) , which conducts signal synthesis processing in order to make the output channels for an audio signal conform to each other, in generating the audio signal from the audio substance information contained in the audio information.

6. The information reproduction system (1, 100) according to claim 5, wherein
the audio information is divided into audio information units, and the audio information contains output channel indication information in order to indicate output channels for each of the audio information units, and
the signal generation device (14, 46, 51) in the information reproduction apparatus (10, 40) conducts the conformity decision processing and the signal synthesis processing, based on output channel indication information corresponding to each of the audio information units, whenever reproducing the audio information units.

7. The information reproduction system (1, 100) according to claim 5, wherein
the audio information contains synthesis processing permission/prohibition information for indicating whether the signal synthesis processing is permitted or prohibited, and
the signal generation device (14, 46, 51) intheinformation reproduction apparatus (10, 40) decides whether the signal synthesis processing is permitted, based on synthesis processing permission/prohibition information contained in the audio information that has been acquiredby the information acquisition device (13, 51), and conducts the signal synthesis processing only when the signal synthesis processing is permitted as a result of the decision.

8. An information reproduction apparatus (10, 40) for generating an audio signal from audio information and outputting the audio signal, the information reproduction apparatus (10, 40) comprising:
a receiver device (11, 51). which receives output control information from another device that holds the output control information for controlling output of the audio signal output from the information reproduction apparatus (10, 40) to output lines (21, 61);
an output channel determination device (12, 51) which determines output channels for the audio signal based on the output control information received by the receiver device (11, 51);
an information acquisition device (13, 51) which acquires the audio information;
a signal generation device (14, 46, 51) which generates an audio signal corresponding to the output channels determined by the output channel determination device (12, 51), from the audio information acquired by the information acquisition device (13, 51); and
a signal output device (15, 46) which outputs the audio signal generated by the signal generation device (14, 46, 51).

9. The information reproduction apparatus (10, 40) according to claim 8, wherein
the output control information contains speaker connection information which indicates whether speakers (71) are connected to the output lines (21, 61) of the output apparatus (20, 60), and
the output channel determination device (12, 51) decides whether speakers (71) are connected to the output lines (21, 61), based on the speaker connection information contained in the output control information, and determines output channels for the audio signal based on a result of the decision.

10. The information reproduction apparatus (10, 40) according toclaim8, further comprising a request device (51) which requests the another device to transmit the output control information.

11. The information reproduction apparatus (10, 40) according to claim 8, wherein the receiver device (11, 51) receives the output control information via a bus (72).

12. The information reproduction apparatus (10, 40) according to claim 8, wherein
the audio information contains audio substance information which is information concerning audio itself, and output channel indication information which indicates output channels for an audio signal generated from the audio substance information,
the signal generation device (14, 46, 51) comprises:
a decision device (14, 51) which compares the output channels indicated by the output channel indication information contained in the audio information acquired by the information acquisition device (13, 51), with the output channels determined by the output channel determination device (12, 51), and conducts conformity decision processing to decide whether those output channels conform to each other; and
a synthesis device (14, 46), responsive to nonconformity of the output channels indicated by the output channel indication information to the output channels determined by the output channel determination device (12, 51) in a result of a decision effected by the decision device (14, 51), which conducts signal synthesis processing in order to make the output channels for an audio signal conform to each other, in generating the audio signal from the audio substance information contained in the audio information.

13. The information reproduction apparatus (10, 40) according to claim 12, wherein
the audio information is divided into audio information units, and the audio information contains output channel indication information in order to indicate output channels for each of the audio information units, and
the signal generation device (14, 46, 51) conducts the conformity decision processing and the signal synthesis processing, based on output channel indication information corresponding to each of the audio information units, whenever reproducing the audio information units.

14. The information reproduction apparatus (10, 40) according to claim 12, wherein
the audio information contains synthesis processing permission/prohibition information for indicating whether the signal synthesis processing is permitted or prohibited, and
the signal generation device (14, 46, 51) decides whether the signal synthesis processing is permitted, based on synthesis processing permission/prohibition information contained in the audio information that has been acquired by the information acquisition device (13, 51) , and conducts the signal synthesis processing only when the signal synthesis processing is permitted as a result of the decision.

15. A computer program embodied in a memory medium, which can be read by a computer in an information reproduction apparatus (10, 40) for generating an audio signal from audio information and outputting the audio signal, the computer program causing the computer to function as:
a receiver device (11, 51) which receives output control information from another device that holds the output control information for controlling output of the audio signal output from the information reproduction apparatus (10, 40) to output lines (21, 61);
an output channel determination device (12, 51) which determines output channels for the audio signal based on the output control information received by the receiver device (11, 51) ;
an information acquisition device (13, 51) which acquires the audio information;
a signal generation device (14, 46, 51) which generates an audio signal corresponding to the output channels determined by the output channel determination device (12, 51), from the audio information acquired by the information acquisition device (13, 51); and
a signal output device (15, 46) which outputs the audio signal generated by the signal generation device (14, 46, 51).

16. An information reproduction method for an information reproduction system (1, 100), the information reproduction system (1, 100) including an information reproduction apparatus (10, 40) for generating an audio signal from audio information and outputting the audio signal, an output apparatus (20, 60) for outputting the audio signal output from the information reproduction apparatus (10, 40), to output lines (21, 61), and an output control apparatus (30, 62) for storing output control information in order to control output of the audio signal in the output apparatus (20, 60) to the output lines (21, 61), and controlling the output apparatus (20, 60) based on the output control information, the information reproduction method comprising:
a communication process for transmitting the output control information from the output control apparatus (30, 62) and receiving the output control information in the information. reproduction apparatus (10, 40);
an output channel determination process conducted in the information reproduction apparatus (10, 40) to determine output channels for the audio signal based on the output control information received in the communication process;
an information acquisition process conducted in the information reproduction apparatus (10, 40) to acquire the audio information;
a signal generation process conducted in the information reproduction apparatus (10, 40) to generate an audio signal corresponding to the output channels determined in the output channel determination process, from the audio information acquired in the information acquisition process; and
a signal output process conducted in the information reproduction apparatus (10, 40) to output the audio signal generated in the signal generation process.
